# FASCICULE DE BREVET EUROPEEN

(11) **EP 4 077 860 B1**
(45) Date de publication et mention de la délivrance du brevet: **20.12.2023**
(21) Numéro de dépôt: 20838948.6
(22) Date de dépôt: 18.12.2020
(51) Int. Cl.: E06B 9/322

(54) **PROCÉDÉ DE COMMANDE EN FONCTIONNEMENT D'UNE INSTALLATION DE PROTECTION SOLAIRE ET INSTALLATION ASSOCIÉE**
VERFAHREN ZUR STEUERUNG DES BETRIEBS EINES SONNENSCHUTZGERÄTS UND ZUGEHÖRIGES GERÄT
CONTROL METHOD IN OPERATION OF A SUN PROTECTION APPARATUS AND ASSOCIATED APPARATUS

(30) Priorité: 19.12.2019 FR 1915013
(43) Date de publication de la demande: 26.10.2022
(73) Titulaire: Somfy Activites SA, 74300 Cluses (FR)
(72) Inventeur: DUPIELET, Norbert, 74300 CLUSES (FR); LAGARDE, Eric, 74300 CLUSES (FR); MARAVAL, Frédéric, 74300 CLUSES (FR); BENOIN, Jean-Charles, 74300 CLUSES (FR); PERACHE, Jean-Michel, 74440 CLUSES (FR); BOERI, Jean-Charles, 74300 CLUSES (FR)
(74) Mandataire: Lavoix
(86) Numéro de dépôt international: PCT/EP2020/086952
(87) Numéro de publication internationale: WO 2021/123115

(56) Documents cités:
- EP-A1- 3 434 857
- JP-A- 2005 350 850
- US-A1- 2014 000 816

## Description

La présente invention concerne un procédé de commande en fonctionnement d'une installation de protection solaire. La présente invention concerne également une installation de protection solaire adaptée à mettre en oeuvre ce procédé de commande.

De manière générale, la présente invention concerne le domaine des dispositifs d'occultation comprenant au moins un rail, un écran, une première barre, une deuxième barre et un dispositif d'entraînement motorisé. La première barre est disposée entre le rail et la deuxième barre, dans une configuration assemblée du dispositif d'occultation. L'écran est disposé entre les première et deuxième barres. L'écran est configuré pour être entraîné en déplacement par le dispositif d'entraînement motorisé. Le dispositif d'entraînement motorisé met en mouvement, d'une part, la première barre reliée à l'écran, entre au moins une première position et au moins une deuxième position, et, d'autre part, la deuxième barre reliée à l'écran, entre au moins une troisième position et au moins une quatrième position.

Il est connu des documents NL 2019347 B1, NL 2020475 B1 et EP 3 434 857 A1 des systèmes pour des stores comprenant deux barres pour régler l'occultation d'une ouverture par un écran. Ces systèmes permettent de choisir la hauteur de la zone à occulter, ainsi que sa position en hauteur au sein de l'ouverture. Pour ce faire, chaque barreZ est reliée à un arbre d'enroulement qui, lorsqu'il est entraîné en rotation par un actionneur électromécanique, initie un déplacement vertical de la barre à laquelle il est relié. Chaque arbre d'enroulement est piloté, de manière indépendante, par une unité de contrôle. Ces systèmes comprennent également un dispositif de limitation de la rotation des arbres d'enroulement pour éviter une collision entre les barres. Ainsi, chaque barre est pilotée indépendamment de l'autre, tout en assurant qu'aucune collision a lieu entre les deux barres. Ces systèmes peuvent rendre le pilotage du store fastidieux pour l'utilisateur, notamment lorsqu'il souhaite déplacer la zone d'occultation entièrement sans en changer la hauteur.

Des inconvénients analogues existent avec le matériel du document US 2012/0200247 A1.

C'est à ces inconvénients qu'entend plus particulièrement remédier l'invention en proposant un procédé de commande en fonctionnement d'une installation de protection solaire, plus intuitif que les procédés connus.

A cet effet, la présente invention concerne, selon un premier aspect, un procédé de commande en fonctionnement d'une installation de protection solaire, l'installation comprenant au moins :
- un dispositif d'occultation, le dispositif d'occultation comprenant au moins :
   -- une barre supérieure,
   -- une barre inférieure, et
   -- un écran, l'écran étant disposé entre les barres supérieure et inférieure,
- un dispositif d'entraînement motorisé, le dispositif d'entraînement motorisé étant configuré pour déployer et replier l'écran, le dispositif d'entraînement motorisé comprenant au moins :
   -- un premier actionneur électromécanique, le premier actionneur électromécanique étant configuré pour déplacer la barre supérieure,
   -- un deuxième actionneur électromécanique, le deuxième actionneur électromécanique étant configuré pour déplacer la barre inférieure, et
   -- une unité de contrôle, l'unité de contrôle étant configurée pour commander les premier et deuxième actionneurs électromécaniques.

Selon l'invention, l'unité de contrôle commande :
- le premier actionneur électromécanique de sorte à déplacer la barre supérieure puis le deuxième actionneur électromécanique de sorte à déplacer la barre inférieure en fonction de la position et/ou du déplacement de la barre supérieure ; ou
- le deuxième actionneur électromécanique de sorte à déplacer la barre inférieure puis le premier actionneur électromécanique de sorte à déplacer la barre supérieure en fonction de la position et/ou du déplacement de la barre inférieure.

Grâce à l'invention, le déplacement de la barre inférieure, respectivement de la barre supérieure, en fonction de la position et/ou du déplacement de la barre supérieure, respectivement de la barre inférieure, permet à l'utilisateur de régler plus facilement et plus intuitivement l'occultation d'une ouverture par l'écran du dispositif d'occultation.

Selon des aspects avantageux mais non obligatoires de l'invention, un tel procédé de commande incorpore une ou plusieurs des caractéristiques suivantes prises selon toute combinaison techniquement admissible :
- L'unité de contrôle commande :
   -- le deuxième actionneur électromécanique de sorte à déplacer la barre inférieure vers le haut, jusqu'à ce que la barre inférieure soit en contact avec la barre supérieure, puis
   -- les premier et deuxième actionneurs électromécaniques, de sorte à déplacer simultanément la barre supérieure et la barre inférieure vers le haut, dans un déplacement identique en direction et en vitesse pour les barres supérieure et inférieure ;
      ou
   -- le premier actionneur électromécanique de sorte à déplacer la barre supérieure vers le bas, jusqu'à ce que la barre supérieure soit en contact avec la barre inférieure, puis
   -- les premier et deuxième actionneurs électromécaniques de sorte à déplacer simultanément la barre supérieure et la barre inférieure vers le bas, dans un déplacement identique en direction et en vitesse pour les barres supérieure et inférieure.
- L'unité de contrôle commande :
   -- le premier actionneur électromécanique de sorte à déplacer la barre supérieure vers le bas jusqu'à ce que la barre supérieure soit en contact avec la barre inférieure,
   -- le premier actionneur électromécanique de sorte à arrêter le déplacement de la barre supérieure, puis
   -- le deuxième actionneur électromécanique de sorte à déplacer la barre inférieure vers le bas et l'éloigner de la barre supérieure ;
      ou
   -- le deuxième actionneur électromécanique de sorte à déplacer la barre inférieure vers le haut jusqu'à ce que la barre inférieure soit en contact avec la barre supérieure,
   -- le deuxième actionneur électromécanique de sorte à arrêter le déplacement de la barre inférieure, puis
   -- le premier actionneur électromécanique de sorte à déplacer la barre supérieure vers le haut et l'éloigner de la barre inférieure.
- L'unité de contrôle commande le premier actionneur électromécanique de sorte à déplacer la barre supérieure et le deuxième actionneur électromécanique de sorte à déplacer simultanément la barre inférieure, dans un déplacement identique, en direction et en vitesse, à celui de la barre supérieure.
- L'unité de contrôle commande le premier actionneur électromécanique de sorte à déplacer la barre supérieure et le deuxième actionneur électromécanique de sorte à déplacer simultanément la barre inférieure, dans un déplacement identique en vitesse et opposé en direction à celui de la barre supérieure.
- Lorsque la barre supérieure atteint une position de fin de course, l'unité de contrôle commande le premier actionneur électromécanique de sorte à arrêter le déplacement de la barre supérieure et le deuxième actionneur électromécanique de sorte à déplacer la barre inférieure et l'éloigner de la barre supérieure. Lorsque la barre inférieure atteint une position de fin de course, l'unité de contrôle commande le deuxième actionneur électromécanique de sorte à arrêter le déplacement de la barre inférieure et le premier actionneur électromécanique de sorte à déplacer la barre supérieure et l'éloigner de la barre inférieure.

La présente invention concerne, selon un second aspect, une installation de protection solaire, l'installation comprenant au moins :
- un dispositif d'occultation, le dispositif d'occultation comprenant au moins :
   -- une barre supérieure,
   -- une barre inférieure, et
   -- un écran, l'écran étant disposé entre les barres supérieure et inférieure,
- un dispositif d'entraînement motorisé, le dispositif d'entraînement motorisé étant configuré pour déployer et replier l'écran, le dispositif d'entraînement motorisé comprenant au moins :
   -- un premier actionneur électromécanique, le premier actionneur électromécanique étant configuré pour déplacer la barre supérieure,
   -- un deuxième actionneur électromécanique, le deuxième actionneur électromécanique étant configuré pour déplacer la barre inférieure, et
   -- une unité de contrôle, l'unité de contrôle étant configurée pour commander les premier et deuxième actionneurs électromécaniques.

L'unité de contrôle est configurée pour mettre en oeuvre le procédé, selon l'invention et tel que mentionné ci-dessus.

Autrement dit, l'unité de contrôle comprend des éléments, en particulier un microcontrôleur, pour mettre en oeuvre le procédé selon l'invention, notamment pour mettre en oeuvre des étapes du procédé selon l'invention.

Cette installation de protection solaire induit les mêmes avantages que ceux mentionnés ci-dessus au sujet du procédé de commande selon l'invention.

Selon des aspects avantageux mais non obligatoires de l'invention, une telle installation de protection solaire incorpore une ou plusieurs des caractéristiques suivantes prises selon toute combinaison techniquement admissible :
- L'installation comprend une unité de commande, l'unité de commande comprenant au moins un premier élément de sélection et au moins un deuxième élément de sélection, distinct du premier élément de sélection, et les premier et deuxième éléments de sélection commandent les barre supérieure et inférieure par l'intermédiaire de l'unité de contrôle.
- Un double appui sur le premier élément de sélection commande un empilement des barres supérieure et inférieure dans une position prédéterminée haute de chacune des barres supérieure et inférieure et un double appui sur le deuxième élément de sélection commande un empilement des barres supérieure et inférieure dans une position prédéterminée basse de chacune des barres supérieure et inférieure.
- L'unité de commande comprend au moins un troisième élément de sélection, les premier et deuxième éléments de sélection commandent les barres supérieure et inférieure, de sorte à régler une position d'une zone d'occultation par l'écran, et le troisième élément de sélection commande les barres supérieure et inférieure, de sorte à régler une étendue verticale de la zone d'occultation par l'écran.
- Les premier et deuxième éléments de sélection sont configurés pour sélectionner une action commandée par le troisième élément de sélection et, éventuellement, les premier et deuxième éléments de sélection sont, en outre, configurés pour commander une ouverture ou une fermeture totale de l'écran.

L'invention sera mieux comprise et d'autres avantages de celle-ci apparaîtront plus clairement à la lumière de la description qui va suivre, de plusieurs modes de réalisation d'un procédé de commande en fonctionnement d'une installation de protection solaire et d'une installation de protection solaire adaptée à mettre en oeuvre un tel procédé, conformes à son principe, donnée uniquement à titre d'exemple et faite en référence aux dessins, dans lesquels :
[Fig 1] la figure 1 est une vue schématique d'une installation de protection solaire conforme à un premier mode de réalisation de l'invention, configurée pour mettre en oeuvre un procédé de commande en fonctionnement de celle-ci selon l'invention, où des barres supérieure et inférieure d'un dispositif d'occultation sont dans un premier état ;
[Fig 2] la figure 2 est une vue schématique de l'installation illustrée à la figure 1, où les barres supérieure et inférieure du dispositif d'occultation sont dans un deuxième état ;
[Fig 3] la figure 3 est une vue schématique de l'installation illustrée aux figures 1 et 2, où les barres supérieure et inférieure du dispositif d'occultation sont dans un troisième état ;
[Fig 4] la figure 4 est une vue schématique de l'installation illustrée aux figures 1 à 3, où les barres supérieure et inférieure du dispositif d'occultation sont dans un quatrième état ;
[Fig 5] la figure 5 est une vue schématique de l'installation illustrée aux figures 1 à 4, où les barres supérieure et inférieure du dispositif d'occultation sont dans un cinquième état ;
[Fig 6] la figure 6 est une vue schématique de l'installation illustrée aux figures 1 à 5, où les barres supérieure et inférieure du dispositif d'occultation sont dans un sixième état ;
[Fig 7] la figure 7 est une vue schématique de l'installation illustrée aux figures 1 à 6, où les barres supérieure et inférieure du dispositif d'occultation sont dans un septième état ;
[Fig 8] la figure 8 est une vue schématique de l'installation illustrée aux figures 1 à 7, où les barres supérieure et inférieure du dispositif d'occultation sont dans un huitième état ; et
[Fig 9] la figure 9 est une vue schématique d'une installation de protection solaire conforme à un deuxième mode de réalisation, configurée pour mettre en oeuvre un procédé de commande en fonctionnement de celle-ci selon l'invention, où des barres supérieure et inférieure d'un dispositif d'occultation sont dans un premier état.

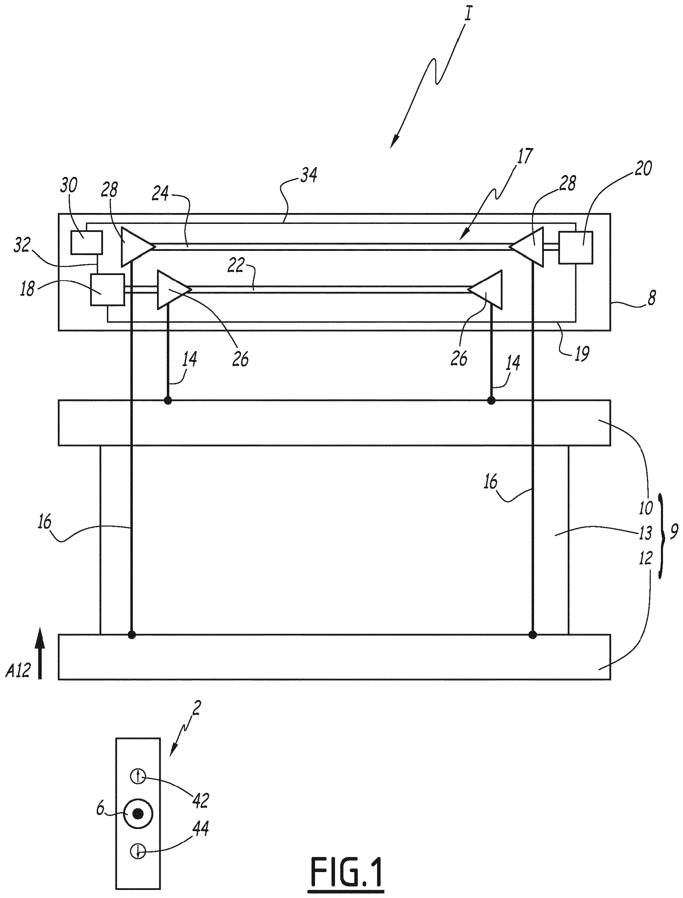

On décrit tout d'abord, en référence aux figures 1 à 8, une installation I conforme à un premier mode de réalisation de l'invention et installée dans un bâtiment comportant une ouverture, non représentée, fenêtre ou porte, équipée d'un écran 13 appartenant à un dispositif d'occultation ou de protection solaire, en particulier un store motorisé.

Le dispositif d'occultation ou de protection solaire est par la suite appelé « dispositif d'occultation ». Le dispositif d'occultation comprend l'écran 13.

Ici, l'installation I comprend le dispositif d'occultation.

Ici, l'écran 13 peut être formé, par exemple, à partir d'une toile plissée ou alvéolée.

On décrit, en référence aux figures 1 à 8, un store conforme au premier mode de réalisation de l'invention.

L'installation l comprend un dispositif d'entraînement 17 d'un store 9 prévu pour occulter, au moins partiellement, l'ouverture, telle qu'une fenêtre ménagée dans un mur d'un bâtiment. Le dispositif d'entraînement 17 est configuré pour entraîner verticalement les barres supérieure et inférieure 10, 12 du store 9. Le dispositif d'entraînement motorisé 17 comprend au moins un actionneur électromécanique 18, 20. Ici et comme illustré à la figure 1, le dispositif d'entraînement motorisé 17 comprend un premier actionneur électromécanique 18 et un deuxième actionneur électromécanique 20.

Le dispositif d'entraînement 17 est logé dans un boîtier 8 du store 9 monté en partie supérieure ou au-dessus de l'ouverture. Le boîtier 8 est généralement appelé rail et, plus particulièrement, rail supérieur.

Dans un mode de montage, non représenté, le boîtier 8 présente une section en forme de « U ».

Le store 9 comprend un écran 13. L'écran 13 est disposé, autrement dit est configuré pour être déployé, entre deux barres 10, 12 du store 9, dites de charge.

Les barres 10, 12 comprennent une barre supérieure 10, à laquelle est lié un bord supérieur de l'écran 13, et une barre inférieure 12, à laquelle est lié un bord inférieur de l'écran 13, parallèle au bord supérieur de l'écran 13. Ainsi, la barre supérieure 10 est parallèle à la barre inférieure 12, dans une configuration assemblée de l'installation I. En outre, les barres supérieure et inférieure 10, 12 sont parallèles à la plus grande dimension du boîtier 8, dans la configuration assemblée de l'installation I. En fonction de la position relative des barres supérieure et inférieure 10, 12, l'écran 13 est plus ou moins déployé.

Le dispositif d'entraînement motorisé 17 et, plus particulièrement, les premier et deuxième actionneurs électromécaniques 18, 20, est configuré pour entraîner en rotation deux arbres d'enroulement 22, 24, appartenant au store 9.

Les arbres d'enroulement 22, 24 comprennent un arbre d'enroulement supérieur 22 et un arbre d'enroulement inférieur 24. L'arbre d'enroulement supérieur 22 est dédié au déplacement de la barre supérieure 10 et l'arbre d'enroulement inférieur 24 est dédié au déplacement de la barre inférieure 12. Ici, les arbres d'enroulement supérieur et inférieur 22, 24 sont parallèles aux barres supérieure et inférieure 10, 12.

L'arbre d'enroulement supérieur 22 est équipé de deux premières poulies d'enroulement 26, chacune de ces premières poulies d'enroulement 26 étant destinée à enrouler ou dérouler un premier cordon 14 attaché à la barre supérieure 10. Chacun des premiers cordons 14 est accroché sur la barre supérieure 10 dans une zone proche de l'une des extrémités de cette barre supérieure 10. De la même manière, l'arbre d'enroulement inférieur 24 est équipé de deux deuxièmes poulies d'enroulement 28, chacune de ces deuxièmes poulies d'enroulement 28 étant destinée à enrouler ou dérouler un deuxième cordon 16 attaché à la barre inférieure 12. Chacun des deuxièmes cordons 16 est accroché sur la barre inférieure 12 dans une zone proche de l'une des extrémités de cette barre inférieure 12. Les premiers et deuxièmes cordons 14, 16 relient les barres supérieure et inférieure 10, 12 aux arbres d'enroulement supérieur et inférieur 22, 24 et supportent donc l'écran 13. Lorsque les premiers ou deuxièmes cordons 14, 16 s'enroulent autour des premières ou deuxièmes poulies d'enroulement 26, 28 correspondantes, la barre supérieure 10 ou inférieure 12 correspondante remonte vers le dispositif d'entraînement motorisé 17 et, plus particulièrement, vers les premier et deuxième actionneurs électromécaniques 18, 20. De la même manière, lorsque les premiers ou deuxièmes cordons 14, 16 se déroulent des premières ou deuxièmes poulies d'enroulement 26, 28 correspondantes, la barre supérieure 10 ou inférieure 12 descend en s'éloignant du boîtier 8.

Les premières et deuxièmes poulies d'enroulement 26, 28 sont communément appelés enrouleurs.

Le nombre de premières et de deuxièmes poulies d'enroulement associées respectivement aux arbres d'enroulement supérieur et inférieur n'est pas limitatif et peut être différent, en particulier supérieur à deux.

Ici et de manière nullement limitative, les premières et deuxième poulies d'enroulement 26, 28 sont de forme tronconique.

Avantageusement, les premières et deuxièmes poulies d'enroulement 26, 28 sont disposées à l'intérieur du boîtier 8, dans une configuration assemblée du store 9.

La longueur des premiers et deuxièmes cordons 14, 16 est prévue pour que ces premiers et deuxièmes cordons 14, 16 soient en permanence tendus, tout en maintenant les barres supérieure et inférieure 10, 12 parallèles entre elles et parallèles aux arbres d'enroulement supérieur et inférieur 22, 24.

Avantageusement, le dispositif d'entraînement motorisé 17 et, plus particulièrement, les premier et deuxième actionneurs électromécaniques 18, 20, est commandé par une unité de commande 2. L'unité de commande 2 peut être, par exemple, une unité de commande locale 2 ou une unité de commande centrale, non représentée.

Avantageusement, l'unité de commande locale 2 peut être reliée, en liaison filaire ou non filaire, avec l'unité de commande centrale.

Avantageusement, l'unité de commande centrale peut piloter l'unité de commande locale 2, ainsi que d'autres unités de commande locales similaires et réparties dans le bâtiment.

Le dispositif d'entraînement motorisé 17 est, de préférence, configuré pour exécuter les commandes de déploiement ou de repli de l'écran 13, pouvant être émises, notamment, par l'unité de commande locale 2 ou centrale.

L'installation I comprend soit l'unité de commande locale 2, soit l'unité de commande centrale, soit l'unité de commande locale 2 et l'unité de commande centrale.

Des moyens de commande du dispositif d'entraînement motorisé 17 et, plus particulièrement, des premier et deuxième actionneurs électromécaniques 18, 20, permettant le déplacement de l'écran 13, comprennent au moins une unité de contrôle 30, en particulier une unité électronique de contrôle. Cette unité de contrôle 30 est apte à mettre en fonctionnement au moins un moteur électrique, non représenté, du dispositif d'entraînement motorisé 17 et, plus particulièrement, le moteur électrique de chacun des premier et deuxième actionneurs électromécaniques 18, 20 et, en particulier, permettre l'alimentation en énergie électrique du ou des moteurs électriques des premier et deuxième actionneurs électromécaniques 18, 20. Ici, le dispositif d'entraînement motorisé 17 et, plus particulièrement, le premier actionneur électromécanique 18 comprend un premier moteur électrique, non représenté, et le deuxième actionneur électromécanique 20 comprend un deuxième moteur électrique, non représenté.

Outre un moteur électrique, chacun des premier et deuxième actionneurs électromécaniques 18, 20 peut comprendre un réducteur, un frein et/ou un embrayage, qui ne sont pas représentés.

Ainsi, l'unité de contrôle 30 commande, notamment, les premier et deuxième moteurs électriques des premier et deuxième actionneurs électromécaniques 18, 20, de sorte à déployer ou replier l'écran 13, comme décrit précédemment.

Les moyens de commande du dispositif d'entraînement motorisé 17 et, plus particulièrement, des premier et deuxième actionneurs électromécaniques 18, 20 comprennent des moyens matériels et/ou logiciels.

A titre d'exemple nullement limitatif, les moyens matériels peuvent comprendre au moins un microcontrôleur, non représenté.

Avantageusement, l'unité de contrôle 30 comprend, en outre, un premier module de communication, non représenté, en particulier de réception d'ordres de commande, les ordres de commande étant émis par un émetteur d'ordres, tel que l'unité de commande locale 2 ou l'unité de commande centrale, ces ordres étant destinés à commander le dispositif d'entraînement motorisé 17.

Préférentiellement, le premier module de communication de l'unité de contrôle 30 est de type sans fil. En particulier, le premier module de communication est configuré pour recevoir des ordres de commande radioélectriques.

Avantageusement, le premier module de communication peut également permettre la réception d'ordres de commande transmis par des moyens filaires.

Avantageusement, l'unité de contrôle 30, l'unité de commande locale 2 et/ou l'unité de commande centrale peuvent être en communication avec une station météorologique, disposée à l'intérieur du bâtiment ou déportée à l'extérieur du bâtiment, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment.

Avantageusement, l'unité de contrôle 30, l'unité de commande locale 2 et/ou l'unité de commande centrale peuvent également être en communication avec un serveur, non représenté, de sorte à contrôler le dispositif d'entraînement motorisé 17 et, plus particulièrement, les premier et deuxième actionneurs électromécaniques 18, 20 suivant des données mises à disposition à distance par l'intermédiaire d'un réseau de communication, en particulier un réseau Internet pouvant être relié au serveur.

L'unité de contrôle 30 peut être commandée à partir de l'unité de commande locale 2 ou centrale. L'unité de commande locale 2 ou centrale est pourvue d'un clavier de commande. Le clavier de commande de l'unité de commande locale 2 ou centrale comprend un ou plusieurs éléments de sélection 42, 44, 6 et, éventuellement, un ou plusieurs éléments d'affichage.

A titre d'exemples nullement limitatifs, les éléments de sélection peuvent comprendre des boutons poussoirs et/ou des touches sensitives. Les éléments d'affichage peuvent comprendre des diodes électroluminescentes et/ou un afficheur LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

L'unité de commande locale 2 ou centrale comprend au moins un deuxième module de communication.

Ainsi, le deuxième module de communication de l'unité de commande locale 2 ou centrale est configuré pour émettre, autrement dit émet, des ordres de commande, en particulier par des moyens sans fil, par exemple radioélectriques, ou par des moyens filaires.

En outre, le deuxième module de communication de l'unité de commande locale 2 ou centrale peut également être configuré pour recevoir, autrement dit reçoit, des ordres de commande, en particulier par l'intermédiaire des mêmes moyens.

Le deuxième module de communication de l'unité de commande locale 2 ou centrale est configuré pour communiquer, autrement dit communique, avec le premier module de communication de l'unité de contrôle 30.

Ainsi, le deuxième module de communication de l'unité de commande locale 2 ou centrale échange des ordres de commande avec le premier module de communication de l'unité de contrôle 30, soit de manière monodirectionnelle, soit de manière bidirectionnelle.

Avantageusement, l'unité de commande locale 2 est un point de commande, pouvant être fixe ou nomade. Un point de commande fixe peut être un boîtier de commande destiné à être fixé sur une façade d'un mur du bâtiment ou sur une face d'un cadre dormant d'une fenêtre ou d'une porte. Un point de commande nomade peut être une télécommande, un téléphone intelligent ou une tablette.

Avantageusement, l'unité de commande locale 2 ou centrale comprend, en outre, un contrôleur.

Le dispositif d'entraînement motorisé 17, en particulier l'unité de contrôle 30, est, de préférence, configuré pour exécuter des ordres de commande de déplacement, notamment de repli ainsi que de déploiement, de l'écran 13. Ces ordres de commande peuvent être émis, notamment, par l'unité de commande locale 2 ou centrale.

Le dispositif d'entraînement motorisé 17 peut être contrôlé par l'utilisateur, par exemple par la réception d'un ordre de commande correspondant à un appui sur le ou l'un des éléments de sélection 42, 44, 6 de l'unité de commande locale 2 ou centrale.

Le dispositif d'entraînement motorisé 17 peut également être contrôlé automatiquement, par exemple par la réception d'un ordre de commande correspondant à au moins un signal provenant d'au moins un capteur et/ou à un signal provenant d'une horloge de l'unité de contrôle 30, en particulier du microcontrôleur. Le capteur et/ou l'horloge peuvent être intégrés à l'unité de commande locale 2 ou centrale.

Avantageusement, le dispositif d'entraînement motorisé 17 peut également comprendre un dispositif de détection de fin de course et/ou d'obstacle, pouvant être mécanique ou électronique.

Le dispositif d'entraînement motorisé 17 et, plus particulièrement, chacun des premier et deuxième actionneurs électromécaniques 18, 20 est alimenté en énergie électrique par une source d'alimentation en énergie électrique, non représentée, pouvant être soit un réseau d'alimentation électrique du secteur soit une batterie, pouvant être rechargée, par exemple, par un panneau photovoltaïque, non représenté.

Ici, le dispositif d'entraînement motorisé 17 comprend un câble d'alimentation électrique, non représenté, permettant son alimentation en énergie électrique à partir de la source d'alimentation en énergie électrique.

Avantageusement, le câble d'alimentation électrique peut comprendre au moins un connecteur électrique, notamment un à chacune de ses extrémités ou un seul à l'une de ses extrémités. Ce câble d'alimentation électrique peut être, par exemple, un cordon, dans le cas où le dispositif d'entraînement motorisé 17 est alimenté en énergie électrique à partir d'un réseau d'alimentation électrique du secteur, pouvant présenter, par exemple, une tension d'alimentation de 110V ou de 230V, ou une limande pourvue de prises du type RJ45 (acronyme du terme anglo-saxon « Registered Jack »), dans le cas où le dispositif d'entraînement motorisé 17 est alimenté en énergie électrique à partir d'un réseau Ethernet.

Avantageusement, chacun des premier et deuxième actionneurs électromécaniques 18, 20 comprend un carter, non représenté, en particulier tubulaire. En outre, chacun des premier et deuxième moteurs électriques est monté à l'intérieur du carter, dans une configuration assemblée du premier ou deuxième actionneur électromécanique 18, 20. De même, l'unité de contrôle 30 peut être montée à l'intérieur du carter de l'un des premier et deuxième actionneurs électromécaniques 18, 20.

Le carter peut être, par exemple, de forme cylindrique, notamment de révolution, ou de forme parallélépipédique.

Dans un exemple de réalisation, le carter est réalisé dans un matériau métallique.

La matière du carter n'est pas limitative et peut être différente. Il peut s'agir, en particulier, d'une matière plastique.

Dans l'exemple de réalisation des figures 1 à 8, l'unité de commande locale 2 est une télécommande. Cette unité de commande locale 2 comprend un premier élément de sélection 42, pouvant correspondre à un premier bouton de commande dit « haut », et un deuxième élément de sélection 44, pouvant correspondre à un deuxième bouton de commande dit « bas ». En outre, l'unité de commande locale 2 comprend un troisième élément de sélection 6, distinct des premier et deuxième éléments de sélection 42, 44, pouvant être, par exemple, une molette. Ici, l'unité de commande locale 2 est un dispositif de commande mobile, destiné à être pris en main par l'utilisateur et qui peut être déplacé par rapport au reste de l'installation I. L'unité de commande locale 2 est configurée pour commander le dispositif d'entraînement 17.

Dans ce premier mode de réalisation de l'installation I, illustré aux figures 1 à 8, le dispositif d'entraînement motorisé 17 comprend le premier actionneur électromécanique 18, incluant le premier moteur électrique, pouvant être dit maître, et le deuxième actionneur électromécanique 20, incluant le deuxième moteur électrique, pouvant être dit esclave. Le premier actionneur électromécanique 18 et le deuxième actionneur électromécanique 20 sont connectés électriquement par une liaison électrique 19. Chacun des premier et deuxième actionneurs électromécaniques 18, 20 est configuré pour entraîner en rotation l'un des arbres d'enroulement supérieur ou inférieur 22, 24.

En variante, le premier moteur électrique du premier actionneur électromécanique 18 peut être dit esclave. En outre, le deuxième moteur électrique du deuxième actionneur électromécanique 20 peut être dit maître.

Grâce à la liaison électrique 19, chacun des premier et deuxième actionneurs électromécaniques 18, 20 et, par conséquent, chacun des premier et deuxième moteurs électriques, est commandé en fonction des ordres de commande transmis à l'autre des premier et deuxième actionneurs électromécaniques 18, 20. Le premier actionneur électromécanique 18 et, par conséquent, le premier moteur électrique, peut donc être commandé en fonction de la position et/ou du déplacement de la barre inférieure 12. En outre, le deuxième actionneur électromécanique 20 et, par conséquent, le deuxième moteur électrique, peut donc être piloté en fonction de la position et/ou du déplacement de la barre supérieure 10.

Dans ce premier mode de réalisation de l'installation I, illustré aux figures 1 à 8, les arbres d'enroulement supérieur et inférieur 22, 24 sont parallèles mais non coaxiaux. En outre, les premier et deuxième actionneurs électromécaniques 18, 20 sont disposés, respectivement, à une extrémité du boîtier 8 et à une extrémité de l'un des arbres d'enroulement supérieur ou inférieur 22, 24. Plus particulièrement, chacun des premier et deuxième actionneurs électromécaniques 18, 20 est disposé dans l'axe de l'un des arbres d'enroulement supérieur ou inférieur 22, 24 qu'il entraîne.

Le dispositif d'entraînement 17 comprend, en outre, l'unité de contrôle 30 pour commander les premier et deuxième actionneur électromécanique 18, 20, en fonction d'un ordre de commande reçu de l'unité de commande locale 2 ou centrale. Ici et comme illustré à la figure 1, l'unité de contrôle 30 est reliée respectivement avec les premier et deuxième actionneurs électromécaniques 18, 20, par une ligne de commande 32, 34.

Au lieu de la liaison électrique 19, l'unité de contrôle 30 et les lignes de commande 32, 34 peuvent être utilisées pour commander l'un des premier et deuxième actionneurs électromécaniques 18, 20 en fonction de la position et/ou du déplacement de la barre supérieure ou inférieure 10, 12 commandée par l'autre des premier et deuxième actionneurs électromécaniques 18, 20.

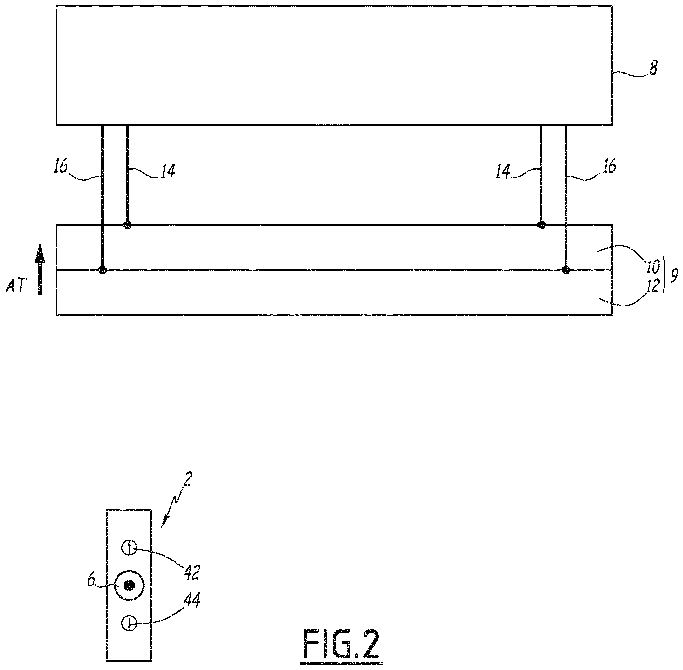

Sur la figure 1, le boîtier 8 est représenté avec arrachement de sa face avant pour visualiser le dispositif d'entraînement motorisé 17. Sur les figures 2 à 8, le boîtier 8 est représenté en vue extérieure.

L'unité de commande locale 2 ou centrale est une interface qui permet à un utilisateur de piloter le store 9 afin de positionner l'écran 13 comme il le souhaite. L'unité de commande locale 2 ou centrale peut être programmée selon différentes configurations pour régler l'occultation de l'ouverture par l'écran 13.

Dans une première configuration de fonctionnement de l'unité de contrôle 30, qui correspond à un premier mode de fonctionnement d'un procédé de commande en fonctionnement de l'installation l, le premier élément de sélection 42 commande la barre supérieure 10 par l'intermédiaire de l'unité de contrôle 30, dans une première direction, et le deuxième élément de sélection 44 commande la barre supérieure 10 par l'intermédiaire de l'unité de contrôle 30, dans une deuxième direction opposée à la première direction.

Par exemple, lorsque l'utilisateur appuie sur le premier élément de sélection 42, autrement dit le bouton « haut » 42, la barre supérieure 10 monte. En outre, lorsque l'utilisateur appuie sur le deuxième élément de sélection 44, autrement dit le bouton « bas » 44, la barre supérieure 10 descend.

Ici, la distance parcourue par la barre supérieure 10 ou inférieure 12 est indépendante du temps d'appui sur le premier ou deuxième élément de sélection 42, 44. La barre supérieure 10 ou inférieure 12 est arrêtée dans une position, souhaitée par l'utilisateur, par un autre appui sur le premier ou deuxième élément de sélection 42, 44.

En variante, la distance parcourue par la barre supérieure 10 ou inférieure 12 est proportionnelle au temps d'appui sur le premier ou deuxième élément de sélection 42, 44.

Par ailleurs, le troisième élément de sélection 6 étant une molette, lorsque l'utilisateur fait tourner la molette en sens horaire, la barre inférieure 12 descend. En outre, lorsque l'utilisateur fait tourner la molette en sens antihoraire, la barre inférieure 12 monte. Ce fonctionnement peut être inversé en fonction des préférences de l'utilisateur. La distance parcourue par la barre inférieure 12 est proportionnelle à un nombre d'incréments du déplacement en rotation du troisième élément de sélection 6.

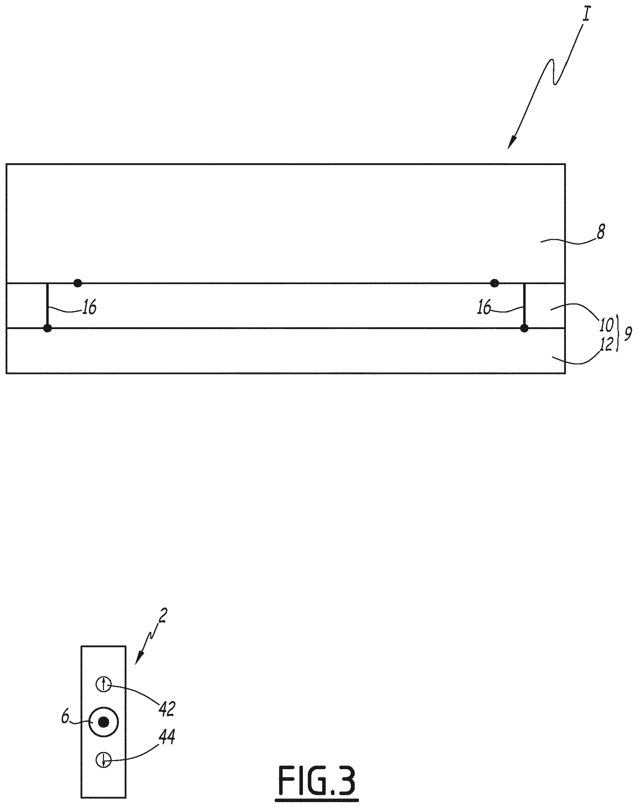

Dans cette première configuration, lorsque le deuxième actionneur électromécanique 20 et, par conséquent, le deuxième moteur électrique, est commandé par l'unité de contrôle 30, que la barre inférieure 12 effectue un déplacement ascendant A12, c'est-à-dire vers le haut, comme représenté sur la figure 1, et que ce déplacement ascendant A12 est maintenu assez longtemps, la barre inférieure 12 vient au contact de la barre supérieure 10, comme représenté sur la figure 2. Si le déplacement ascendant de la barre inférieure 12 est maintenu, du fait du nombre d'incréments résultant de la manoeuvre du troisième élément de sélection 6, les premier et deuxième actionneurs électromécaniques 18, 20 sont commandés par l'unité de contrôle 30 et les barres supérieure et inférieure 10, 12 sont entraînées dans un déplacement ascendant commun AT, identique en direction et en vitesse pour les barres supérieure et inférieure 10, 12, jusqu'à ce que celles-ci arrivent toutes les deux dans une position prédéterminée haute, cette position prédéterminée haute pouvant être une position de fin de course haute contre le boîtier 8, comme représenté sur la figure 3. Dans cette position prédéterminée haute, la barre supérieure 10 est en butée contre le boîtier 8 et la barre inférieure 12 est en butée contre la barre supérieure 10. En fonction du nombre d'incréments résultant de la manoeuvre du troisième élément de sélection 6, la position prédéterminée haute peut également être une position intermédiaire entre celle représentée à la figure 2 et celle représentée à la figure 3. Dans ce cas, dans cette position prédéterminée haute, la barre supérieure 10 n'est pas en butée contre le boîtier 8 mais la barre inférieure 12 est en butée contre la barre supérieure 10.

On peut prévoir que la situation est analogue lors d'un déplacement descendant, c'est-à-dire vers le bas, à savoir que les barres supérieure et inférieure 10, 12 se déplacent conjointement, dans un déplacement identique en direction et en vitesse, à partir du moment où la barre supérieure 10 a rejoint la barre inférieure 12, jusqu'à atteindre une position prédéterminée basse en même temps, cette position prédéterminée basse pouvant être une position de fin de course basse.

Dans ce premier mode de fonctionnement du procédé, l'une des barres supérieure ou inférieure en mouvement 10, 12 entraîne avec elle l'autre des barres supérieure ou inférieure 10, 12 immobile au moment de leur mise en contact pour la suite du déplacement.

Dans les deuxième à cinquième modes de fonctionnement du procédé décrits ci-après, les éléments structurels de l'installation I sont les mêmes que ceux de la figure 1, puisqu'il s'agit de la même installation I. Seuls les déplacements des barres supérieure et inférieure 10, 12 diffèrent entre ces différents modes de fonctionnement.

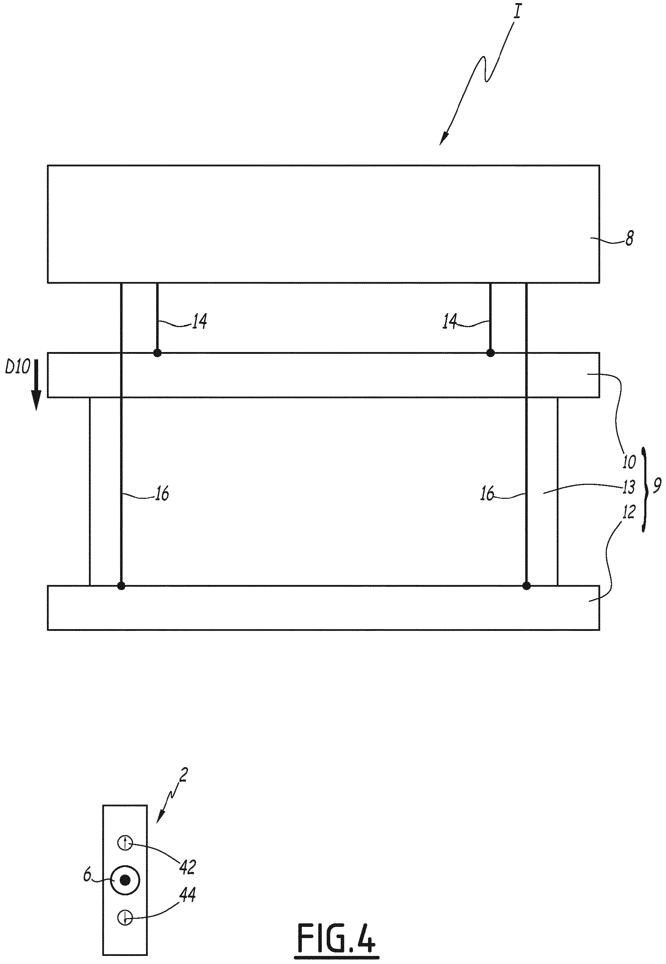

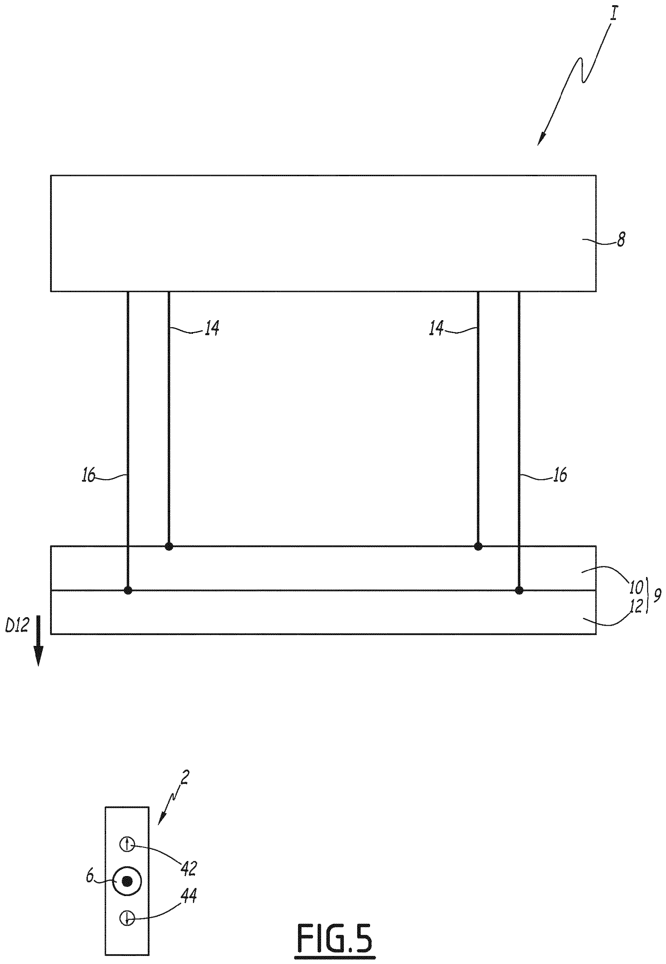

Dans une deuxième configuration de fonctionnement de l'unité de contrôle 30, qui correspond à un deuxième mode de fonctionnement du procédé de commande en fonctionnement de l'installation I, représentée aux figures 4 et 5, les premier et deuxième éléments de sélection 42, 44 commandent la barre supérieure 10 et le troisième élément de sélection 6 commande la barre inférieure 12, comme dans la première configuration de fonctionnement de l'unité de contrôle 30. Lorsque le premier actionneur électromécanique 18 et, par conséquent, le premier moteur électrique, est commandé par l'unité de contrôle 30, que la barre supérieure 10 effectue un déplacement descendant D10, c'est-à-dire vers le bas, comme représenté sur la figure 4, que la barre inférieure 12 a préalablement été descendue et que ce déplacement descendant D10 est maintenu assez longtemps, la barre supérieure 10 vient au contact de la barre inférieure 12, comme représenté sur la figure 5. Le premier actionneur électromécanique 18 est alors commandé par l'unité de contrôle 30 pour que la barre supérieure 10 s'arrête et le deuxième actionneur électromécanique 20 et, par conséquent, le deuxième moteur électrique, est commandé par l'unité de contrôle 30 pour que la barre inférieure 12 effectue un déplacement descendant D12 pour poursuivre le déplacement descendant initié par la barre supérieure 10 et éloigner la barre inférieure 12 de la barre supérieure 10, sur une course qui dépend de la commande effectuée au niveau du deuxième élément de sélection 44. La position basse atteinte par la barre inférieure 12 peut être la position prédéterminée basse ou non.

Une situation est mise en oeuvre de manière analogue lors d'un déplacement ascendant, à savoir que la barre supérieure 10 poursuit le déplacement vers le haut et s'éloigne de la barre inférieure 12 qui s'immobilise à partir du moment où la barre inférieure 12 a rejoint la barre supérieure 10, jusqu'à atteindre une position haute, cette position haute pouvant être la position prédéterminée haute ou non.

Dans ce deuxième mode de fonctionnement du procédé, l'une des barres supérieure ou inférieure 10, 12 en mouvement « repousse » l'autre des barres supérieure ou inférieure 10, 12 immobile au moment de leur mise en contact pour lancer la suite du déplacement.

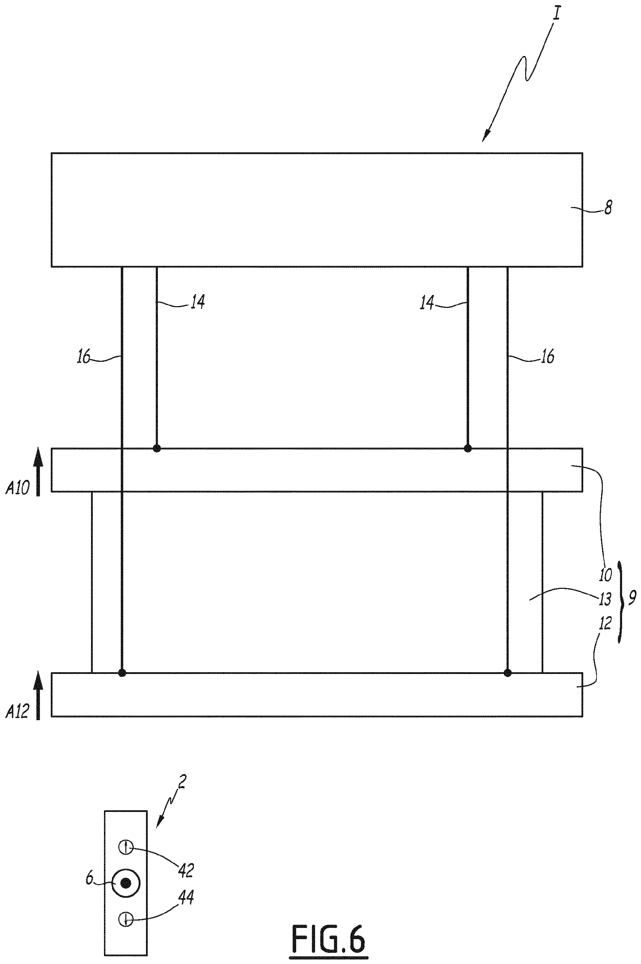

Dans une troisième configuration de fonctionnement de l'unité de contrôle 30, qui correspond à un troisième mode de fonctionnement du procédé de commande en fonctionnement de l'installation I, représentée à la figure 6, lorsqu'aucune des barres supérieure et inférieure 10, 12 n'est dans une position prédéterminée haute ou basse, autrement dit de fin de course haute ou basse, c'est-à-dire lorsqu'aucun des premier et deuxième cordons 14, 16 n'est totalement enroulé ou déroulé autour des premières et deuxièmes poulies d'enroulement 26, 28, le premier ou deuxième élément de sélection 42, 44 commande les barres supérieure et inférieure 10, 12 simultanément, dans la même direction, pour déplacer la zone d'occultation définie par l'écran 13 déployé entre ces barres supérieure et inférieure 10, 12.

Par exemple, comme représenté sur la figure 6, lorsque l'utilisateur appuie sur le premier élément de sélection 42, autrement dit le bouton « haut », le premier actionneur électromécanique 18 et, par conséquent, le premier moteur électrique, est commandé par l'unité de contrôle 30 et la barre supérieure 10 effectue un déplacement ascendant A10 et, simultanément, le deuxième actionneur électromécanique 20 et, par conséquent, le deuxième moteur électrique, est commandé par l'unité de contrôle 30 et la barre inférieure 12 effectue un déplacement ascendant A12. Les barres supérieure et inférieure 10, 12 se déplacent de manière identique en direction et en vitesse, vers le haut, de sorte qu'un écartement entre les barres supérieure et inférieure 10, 12 reste constant.

De la même manière, lorsque l'utilisateur appuie sur le deuxième élément de sélection 44, autrement dit le bouton « bas », les barres supérieure et inférieure 10, 12 se déplacent, à la même vitesse et dans la même direction, vers le bas.

Le déplacement entamé des barres supérieure et inférieure 10, 12 par l'appui sur l'un des premier ou deuxième élément de sélection 42, 44 n'est arrêté que lorsqu'un ordre de commande d'arrêt est envoyé par l'utilisateur par l'intermédiaire de l'unité de commande locale 2 ou centrale, par exemple en appuyant de nouveau sur le premier ou deuxième élément de sélection 42, 44 précédemment activé, ou lorsque l'une des barres supérieure et inférieure 10, 12 atteint l'une de positions prédéterminées haute ou basse, autrement dit de fin de course haute ou basse.

Lorsque l'une des barres supérieure ou inférieure 10, 12 est dans l'une de positions prédéterminées haute ou basse, autrement dit de fin de course haute ou basse, elle est dite « ancrée ». En outre, l'utilisation du premier ou deuxième élément de sélection 42, 44 commande l'autre barre supérieure ou inférieure 10, 12, autrement dit celle qui n'est pas dans l'une de positions prédéterminées haute ou basse. Le premier élément de sélection 42, autrement dit le bouton « haut », fait monter cette barre supérieure ou inférieure 10, 12 et le deuxième élément de sélection 44, autrement dit le bouton « bas », fait descendre cette barre supérieure ou inférieure 10, 12.

Lorsque la barre supérieure 10 est en butée supérieure, autrement dit en position prédéterminée haute, et la barre inférieure 12 est en butée inférieure, autrement dit en position prédéterminée basse, les barres supérieure et inférieure 10, 12 sont alors dites « ancrées ». En outre, un appui sur le premier élément de sélection 42, autrement dit le bouton « haut », provoque un déplacement de montée de la barre inférieure 12 et un appui sur le deuxième élément de sélection 44, autrement dit le bouton « bas », provoque un déplacement de descente de la barre supérieure 10.

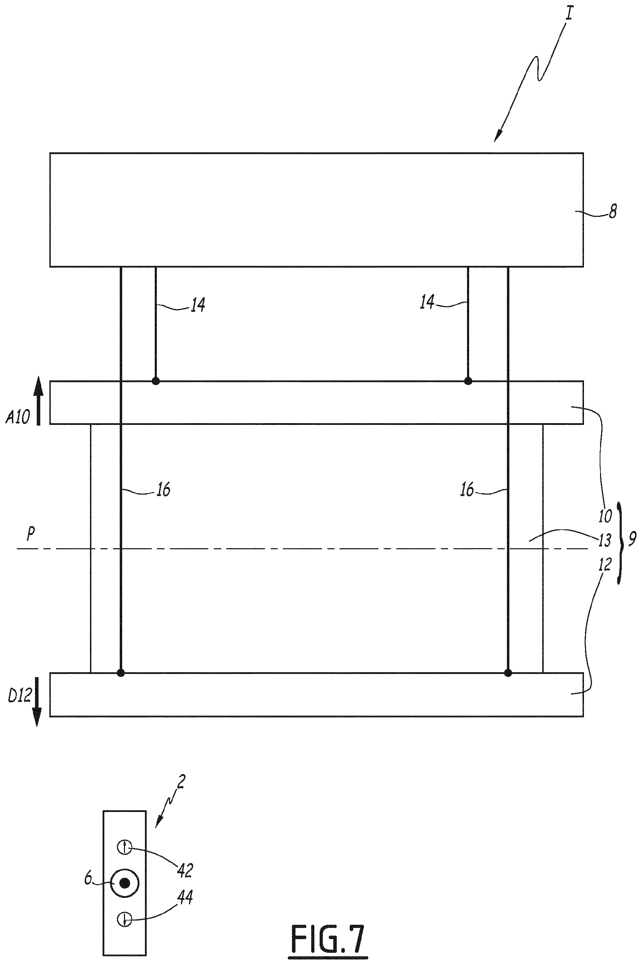

Dans une quatrième configuration de fonctionnement de l'unité de contrôle 30, qui correspond à un quatrième mode de fonctionnement du procédé de commande en fonctionnement de l'installation I, représentée à la figure 7, le troisième élément de sélection 6 ajuste la hauteur de la zone d'occultation et le rôle des premier et deuxième éléments de sélection 42, 44 peut être identique à celui de la troisième configuration de fonctionnement.

Par exemple, lorsque le troisième élément de sélection 6 est tourné dans le sens horaire, la hauteur de la zone d'occultation par l'écran 13 augmente. Pour ce faire, le premier actionneur électromécanique 18 et, par conséquent, le premier moteur électrique, est commandé par l'unité de contrôle 30 pour que la barre supérieure 10 effectue un déplacement ascendant A10, c'est-à-dire vers le haut, et le deuxième actionneur électromécanique 20 et, par conséquent, le deuxième moteur électrique, est commandé par l'unité de contrôle 30 pour que la barre inférieure 12 effectue un déplacement descendant D12, c'est-à-dire vers le bas, comme représenté sur la figure 7.

Pour faciliter l'utilisation, les barres supérieure et inférieure 10, 12 s'écartent l'une de l'autre en s'éloignant d'un plan médian P. Le plan médian P est situé, entre les barres supérieure et inférieure 10, 12, à égale distance des barres supérieure et inférieure 10, 12. Les barres supérieure et inférieure 10, 12 effectuant un déplacement identique en vitesse et opposé en direction, le plan médian P ne se déplace pas lors du déplacement des barres supérieure et inférieure 10, 12.

De la même manière, lorsque le troisième élément de sélection 6 est tourné dans le sens antihoraire, la hauteur de la zone d'occultation par l'écran 13 diminue. Pour ce faire, le premier actionneur électromécanique 18 et, par conséquent, le premier moteur électrique, est commandé par l'unité de contrôle 30 de sorte à déplacer la barre supérieure 10 vers le bas et, simultanément, le deuxième actionneur électromécanique 20 et, par conséquent, le deuxième moteur électrique, est commandé par l'unité de contrôle 30 de sorte à déplacer la barre inférieure 12 vers le haut, dans un déplacement identique en vitesse et opposé en direction à celui de la barre supérieure 10.

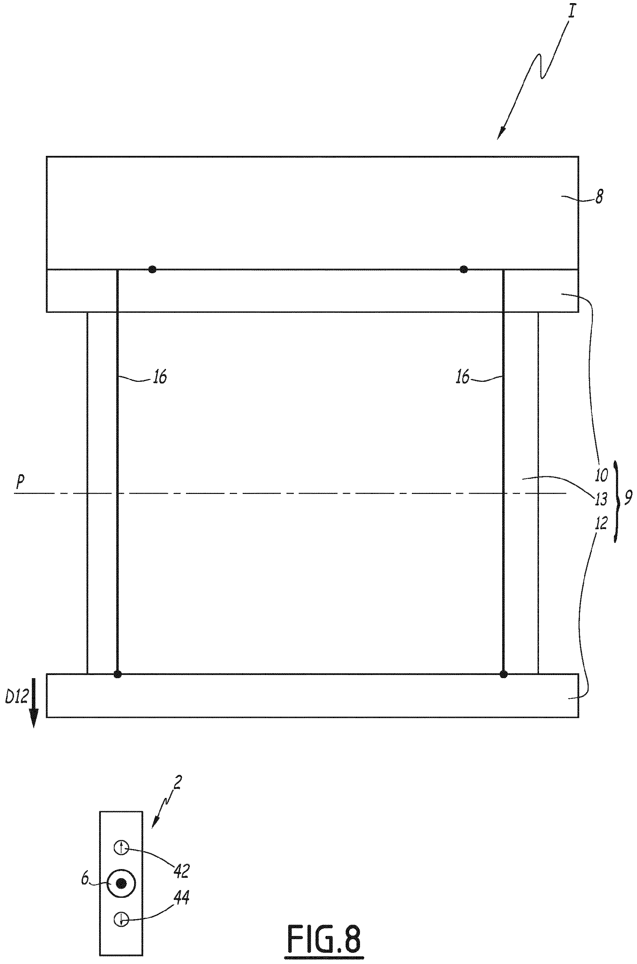

Dans une cinquième configuration de fonctionnement de l'unité de contrôle 30, basée sur la quatrième configuration de fonctionnement de l'unité de contrôle 30, qui correspond à un cinquième mode de fonctionnement du procédé de commande en fonctionnement de l'installation I, représentée à la figure 8, lorsque, lors de l'augmentation de la hauteur de la zone d'occultation par l'écran 13, l'une des barres supérieure ou inférieure 10, 12 atteint une position prédéterminée haute ou basse, autrement dit de fin de course haute ou basse, celle-ci s'arrête et l'autre des barres supérieure ou inférieure 10, 12 continue le déplacement commandé par l'utilisateur par l'actionnement du troisième élément de sélection 6.

Dans l'exemple de la figure 8, la barre supérieure 10 étant arrivée dans la position prédéterminée haute, autrement dit la position de fin de course haute, le premier actionneur électromécanique 18 et, par conséquent, le premier moteur électrique, est commandé par l'unité de contrôle 30 pour arrêter la barre supérieure 10. En outre, le deuxième actionneur électromécanique 20 et, par conséquent, le deuxième moteur électrique, est commandé pour que la barre inférieure 12 effectue un déplacement descendant D12, en s'éloignant de la barre supérieure 10 et du plan médian P, qui n'est plus à égale distance des barres supérieure et inférieure 10, 12.

Une situation analogue est mise en oeuvre lorsque la barre inférieure 12, lors de l'augmentation de la hauteur de la zone d'occultation par l'écran 13, atteint la position prédéterminée basse, autrement dit la position de fin de course basse. La barre inférieure 12 est alors arrêtée et la barre supérieure 10 poursuit son déplacement ascendant en s'éloignant de la barre inférieure 12.

Selon une caractéristique optionnelle, qui peut être ajoutée aux cinq configurations de fonctionnement de l'unité de contrôle 30, un double appui sur l'un des premier et deuxième éléments de sélection 42, 44 provoque un empilement des barres supérieure et inférieure 10, 12 dans la position prédéterminée haute ou basse, autrement dit de fin de course haute ou basse, en fonction de la direction demandée par l'intermédiaire de l'unité de commande locale 2 ou centrale.

Par exemple, après un double appui, en particulier rapide, sur le premier élément de sélection 42, autrement dit le bouton « haut », la barre supérieure 10 se déplace vers le haut jusqu'à atteindre la position prédéterminée haute, autrement dit la position de fin de course haute, en particulier en butée contre le boîtier 8, et, simultanément, la barre inférieure 12 se déplace vers le haut jusqu'à atteindre la position prédéterminée haute, autrement la position de fin de course haute, en particulier en butée contre la barre supérieure 10, comme sur la figure 3.

De la même manière, après un double appui, en particulier rapide, sur le deuxième élément de sélection 44, autrement dit le bouton « bas », la barre inférieure 12 se déplace vers le bas jusqu'à atteindre la position prédéterminée basse, autrement dit la position de fin de course basse, en particulier lorsque les deuxièmes cordons 16 sont totalement déroulés par rapport aux deuxièmes poulies d'enroulement 28, et, simultanément, la barre supérieure 10 se déplace vers le bas jusqu'à atteindre la position basse, autrement la position de fin de course basse, en particulier en butée contre la barre inférieure 12.

Selon une autre caractéristique optionnelle, qui peut être ajoutée aux cinq configurations de fonctionnement de l'unité de contrôle 30, un appui, en particulier long, sur le premier élément de sélection 42, autrement dit la touche « haut », commande l'empilement des barres supérieure et inférieure 10, 12 dans la position prédéterminée haute, autrement dit de fin de course haute, comme sur la figure 3. L'écran 13 du store 9 est donc, dans ce cas, totalement replié. En outre, un appui, en particulier long, sur le deuxième élément de sélection 44, autrement dit la touche « bas », permet de déployer entièrement l'écran 13 en faisant remonter la barre supérieure 10 jusqu'à la position prédéterminée haute, autrement dit la position de fin de course haute, et en faisant descendre la barre inférieure 12 jusqu'à la position prédéterminée basse, autrement dit la position de fin de course basse. L'écran 13 du store 9 est donc, dans ce cas, totalement déployé.

Le procédé de commande en fonctionnement de l'installation I selon l'invention permet donc, quelle que soit la configuration choisie par l'utilisateur, de commander un déplacement différencié ou simultané des barres supérieure et inférieure 10, 12.

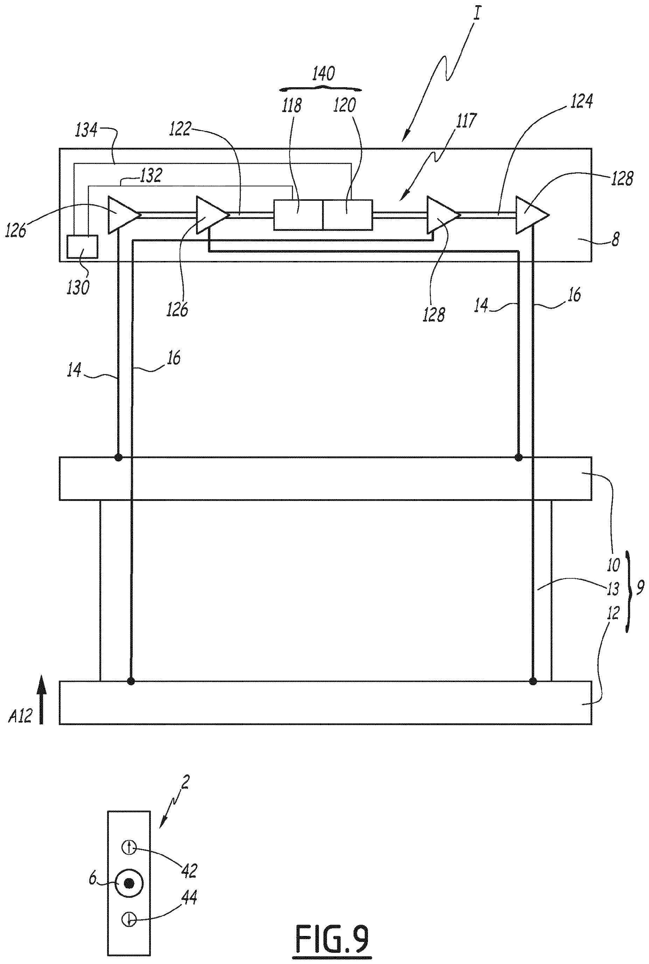

Sur la figure 9 est représentée une installation I conforme à un deuxième mode de réalisation de l'invention et comprenant un dispositif d'entraînement motorisé 117. Le dispositif d'entraînement motorisé 117 du deuxième mode de réalisation est fonctionnellement similaire au dispositif d'entraînement motorisé 17 du premier mode de réalisation, mais s'en distingue par sa structure. Les éléments de l'installation I analogues à ceux du premier mode de réalisation portent les mêmes références augmentées de 100 et fonctionnent de la même façon. En particulier, l'unité de commande locale 102 de ce deuxième mode de réalisation est identique à l'unité de commande locale 2 du premier mode de réalisation. C'est pourquoi ces éléments de sélection 42, 44, 6 conservent les mêmes références. Dans ce qui suit, on décrit principalement les différences entre les premier et deuxième modes de réalisation de l'installation I, au niveau du dispositif d'entraînement motorisé 17, 117.

On décrit maintenant, l'installation I selon le deuxième mode de réalisation de l'invention et le dispositif d'entraînement motorisé 117, en référence à la figure 9.

Dans ce deuxième mode de réalisation, le dispositif d'entraînement motorisé 117 comprend un premier actionneur électromécanique 118 et un deuxième actionneur électromécanique 120. Le premier actionneur électromécanique 118 comprend un premier moteur électrique, non représenté, pouvant être dit maître. En outre, le deuxième actionneur électromécanique 120 comprend un deuxième moteur électrique, non représenté, pouvant être dit esclave.

En variante, le premier moteur électrique du premier actionneur électromécanique 118 peut être dit esclave. En outre, le deuxième moteur électrique du deuxième actionneur électromécanique 120 peut être dit maître.

Le premier actionneur électromécanique 118 et le deuxième actionneur électromécanique 120 ont des formes complémentaires, de sorte à s'emboîter l'un dans l'autre. L'emboîtement du premier actionneur électromécanique 118 et du deuxième actionneur électromécanique 120 permet de réaliser une liaison électrique, non représentée, entre les premier et deuxième actionneurs électromécaniques 118, 120, sans nécessiter de câble de raccordement entre eux, ainsi qu'une liaison mécanique.

Le dispositif d'entraînement motorisé 117 comprend, en outre, deux arbres d'enroulement 122, 124, qui sont coaxiaux. Le premier arbre d'enroulement 122 est muni de deux premières poulies d'enroulement 126, de sorte à enrouler ou dérouler, simultanément, les premiers cordons 14 et donc monter ou descendre la barre supérieure 10. Le deuxième arbre d'enroulement 124 est également muni de deux deuxièmes poulies d'enroulement 128, de sorte à enrouler ou dérouler, simultanément, les deuxièmes cordons 16 et donc monter ou descendre la barre inférieure 12.

Les premières et deuxièmes poulies d'enroulement 126, 128 sont, dans ce deuxième mode de réalisation, également de forme tronconique.

Afin de réduire l'encombrement du dispositif d'entraînement motorisé 117, les premier et deuxième actionneurs électromécaniques 118, 120 sont emboîtés et les premier et deuxième arbres d'enroulement 122, 124 sont disposés de part et d'autre d'un bloc 140 formé par les premier et deuxième actionneurs électromécaniques 118, 120, chacun des premier et deuxième arbres d'enroulement 122, 124 étant lié à un arbre de sortie, non représenté, des premier et deuxième actionneurs électromécaniques 118, 120.

Les premier et deuxième actionneurs électromécaniques 118, 120 et, par conséquent, les premier et deuxième moteurs électriques, sont commandés par une unité de contrôle 130, en particulier commune, à laquelle ils sont respectivement reliés par deux lignes de commandes 132, 134. L'unité de contrôle 130 permet de mettre en oeuvre dans le deuxième mode de réalisation, avec les premier et deuxième actionneurs électromécaniques 118, 120, les mêmes configurations de fonctionnement du procédé de commande en fonctionnement de l'installation I que celles mentionnées ci-dessus au sujet de l'installation I du premier mode de réalisation.

Quel que soit le mode de réalisation et comme représenté sur les figures 1 et 9, l'unité de contrôle 30, 130 peut être constituée en une seule partie et disposée à l'extérieur des premier et deuxième actionneurs électromécaniques 18, 118, 20, 120. Dans ce cas, il n'est pas obligatoire de gérer un fonctionnement maître/esclave entre les premier et deuxième moteurs électriques de ces premier et deuxième actionneurs électromécaniques 18, 118, 20, 120.

En variante, non représentée, l'unité de contrôle 30, 130 est divisée en deux parties, avec une partie intégrée dans chacun des premier et deuxième actionneurs électromécaniques 18, 20, 118, 120. Le premier actionneur électromécanique 18, 118 comprend un premier moteur électrique, dit maître, et le deuxième actionneur électromécanique 20, 120 comprend un deuxième moteur électrique, dit esclave, ou inversement. Dans ce cas, chacun des premier et deuxième actionneurs électromécaniques 18, 20, 118, 120 comprend une partie de l'unité de contrôle 30, 130, permettant de commander le deuxième actionneur électromécanique 20, 120 en fonction de la position et/ou du déplacement de la barre supérieure 10, 110 entraînée par le premier actionneur électromécanique 18, 118, ou réciproquement.

En variante, non représentée, les premier et deuxième éléments de sélection 42, 44 peuvent être remplacés, par exemple, par une molette, comme pour le troisième élément de sélection 6.

Selon une autre variante, non représentée, le troisième élément de sélection 6 peut être remplacé, par exemple, par un bouton « haut » et un bouton « bas », comme pour les premier et deuxième éléments de sélection 42, 44.

En variante, non représentée, l'unité de commande locale 2, 102 peut être installée à poste fixe dans l'installation I. Dans ce cas, les premier et deuxième modules de communication respectivement de l'unité de contrôle 30, 130 et de l'unité de commande locale 2, 102 peuvent être, au choix, filaires ou sans fil.

En variante, l'action commandée par le troisième élément de sélection 6 est sélectionnée en appuyant sur le ou les premier et deuxième éléments de sélection 42, 44, qui font office d'éléments de navigation dans un menu. Par exemple, un appui court sur le premier élément de sélection 42 permet au troisième élément de sélection 6 de commander la barre supérieure 10 seule et un appui court sur le deuxième élément de sélection 44 permet au troisième élément de sélection 6 de commander la barre inférieure 12 seule.

En variante, non représentée, dans le premier mode de réalisation de l'installation I, la liaison électrique entre les premier et deuxième actionneurs électromécaniques 18, 20 est réalisée par l'intermédiaire de l'unité de contrôle 30 et des lignes de commande 32, 34.

Les modes de réalisation et les variantes mentionnés ci-dessus peuvent être combinés entre eux pour générer de nouveaux modes de réalisation sans sortir du cadre de l'invention par les revendications.

## Revendications

1. Procédé de commande en fonctionnement d'une installation (I) de protection solaire, l'installation (I) comprenant au moins :
- un dispositif d'occultation (9), le dispositif d'occultation (9) comprenant au moins :
- une barre supérieure (10),
- une barre inférieure (12), et
- un écran (13), l'écran (13) étant disposé entre les barres supérieure et inférieure (10, 12),
- un dispositif d'entraînement motorisé (17 ; 117), le dispositif d'entraînement motorisé (17 ; 117) étant configuré pour déployer et replier l'écran (13), le dispositif d'entraînement motorisé (17 ; 117) comprenant au moins :
-- un premier actionneur électromécanique (18 ; 118), le premier actionneur électromécanique (18 ; 118) étant configuré pour déplacer la barre supérieure (10),
-- un deuxième actionneur électromécanique (20 ; 120), le deuxième actionneur électromécanique (20 ; 120) étant configuré pour déplacer la barre inférieure (12), et
-- une unité de contrôle (30 ; 130), l'unité de contrôle (30 ; 130) étant configurée pour commander les premier et deuxième actionneurs électromécaniques (18, 20 ; 118, 120),
**caractérisé en ce que** l'unité de contrôle (30 ; 130) commande :
- le premier actionneur électromécanique (18 ; 118) de sorte à déplacer la barre supérieure (10) puis le deuxième actionneur électromécanique (20 ; 120) de sorte à déplacer la barre inférieure (12) en fonction de la position et/ou du déplacement de la barre supérieure (10) ;
ou
- le deuxième actionneur électromécanique (20 ; 120) de sorte à déplacer la barre inférieure (12) puis le premier actionneur électromécanique (18 ; 118) de sorte à déplacer la barre supérieure (10) en fonction de la position et/ou du déplacement de la barre inférieure (12).

2. Procédé de commande en fonctionnement d'une installation (I) de protection solaire selon la revendication 1, **caractérisé en ce que** l'unité de contrôle (30 ; 130) commande :
- le deuxième actionneur électromécanique (20 ; 120) de sorte à déplacer la barre inférieure (12) vers le haut (A12), jusqu'à ce que la barre inférieure (12) soit en contact avec la barre supérieure (10), puis
- les premier et deuxième actionneurs électromécaniques (18, 20 ; 118, 120) de sorte à déplacer simultanément (AT) la barre supérieure (10) et la barre inférieure (12) vers le haut, dans un déplacement identique en direction et en vitesse pour les barres supérieure et inférieure (10, 12) ;
ou
- le premier actionneur électromécanique (18 ; 118) de sorte à déplacer la barre supérieure (10) vers le bas, jusqu'à ce que la barre supérieure (10) soit en contact avec la barre inférieure (12), puis
- les premier et deuxième actionneurs électromécaniques (18, 20 ; 118, 120) de sorte à déplacer simultanément la barre supérieure (10) et la barre inférieure (12) vers le bas, dans un déplacement identique en direction et en vitesse pour les barres supérieure et inférieure (10, 12).

3. Procédé de commande en fonctionnement d'une installation (I) de protection solaire selon la revendication 1 ou selon la revendication 2, **caractérisé en ce que** l'unité de contrôle (30 ; 130) commande :
- le premier actionneur électromécanique (18 ; 118) de sorte à déplacer la barre supérieure (10) vers le bas (D10) jusqu'à ce que la barre supérieure (10) soit en contact avec la barre inférieure (12),
- le premier actionneur électromécanique (18 ; 118) de sorte à arrêter le déplacement de la barre supérieure (10), puis
- le deuxième actionneur électromécanique (20 ; 120) de sorte à déplacer la barre inférieure (12) vers le bas (D12) et l'éloigner de la barre supérieure (10) ;
ou
- le deuxième actionneur électromécanique (20 ; 120) de sorte à déplacer la barre inférieure (12) vers le haut jusqu'à ce que la barre inférieure (12) soit en contact avec la barre supérieure (10),
- le deuxième actionneur électromécanique (20 ; 120) de sorte à arrêter le déplacement de la barre inférieure (10), puis
- le premier actionneur électromécanique (18 ; 118) de sorte à déplacer la barre supérieure (10) vers le haut et l'éloigner de la barre inférieure (12).

4. Procédé de commande en fonctionnement d'une installation (I) de protection solaire selon l'une quelconque des revendications 1 à 3, **caractérisé en ce que** l'unité de contrôle (30 ; 130) commande :
- le premier actionneur électromécanique (18 ; 118) de sorte à déplacer (A10) la barre supérieure (10), et
- le deuxième actionneur électromécanique (20 ; 120) de sorte à déplacer simultanément (A12) la barre inférieure (12), dans un déplacement identique, en direction et en vitesse, à celui de la barre supérieure (10).

5. Procédé de commande en fonctionnement d'une installation (I) de protection solaire selon l'une quelconque des revendications 1 à 4, **caractérisé en ce que** l'unité de contrôle (30 ; 130) commande :
- le premier actionneur électromécanique (18 ; 118) de sorte à déplacer (A10) la barre supérieure (10), et
- le deuxième actionneur électromécanique (20 ; 120) de sorte à déplacer simultanément (D12) la barre inférieure (12), dans un déplacement identique en vitesse et opposé en direction à celui de la barre supérieure (10).

6. Procédé de commande en fonctionnement d'une installation (I) de protection solaire selon la revendication 5, **caractérisé en ce que** :
- lorsque la barre supérieure (10) atteint une position de fin de course, l'unité de contrôle (30 ; 130) commande :
-- le premier actionneur électromécanique (18 ; 118) de sorte à arrêter le déplacement de la barre supérieure (10), et
-- le deuxième actionneur électromécanique (20 ; 120) de sorte à déplacer (D12) la barre inférieure (12) et l'éloigner de la barre supérieure (10) ; et
- lorsque la barre inférieure (12) atteint une position de fin de course, l'unité de contrôle (30 ; 130) commande :
-- le deuxième actionneur électromécanique (20 ; 120) de sorte à arrêter le déplacement de la barre inférieure (12), et
-- le premier actionneur électromécanique (18 ; 118) de sorte à déplacer la barre supérieure (10) et l'éloigner de la barre inférieure (12).

7. Installation (I) de protection solaire, l'installation (I) comprenant au moins :
- un dispositif d'occultation (9), le dispositif d'occultation (9) comprenant au moins :
-- une barre supérieure (10),
-- une barre inférieure (12), et
-- un écran (13), l'écran (13) étant disposé entre les barres supérieure et inférieure (10, 12),
- un dispositif d'entraînement motorisé (17 ; 117), le dispositif d'entraînement motorisé (17 ; 117) étant configuré pour déployer et replier l'écran (13), le dispositif d'entraînement motorisé (17 ; 117) comprenant au moins :
-- un premier actionneur électromécanique (18 ; 118), le premier actionneur électromécanique (18 ; 118) étant configuré pour déplacer la barre supérieure (10),
-- un deuxième actionneur électromécanique (20 ; 120), le deuxième actionneur électromécanique (20 ; 120) étant configuré pour déplacer la barre inférieure (12), et
-- une unité de contrôle (30 ; 130), l'unité de contrôle (30 ; 130) étant configurée pour commander les premier et deuxième actionneurs électromécaniques (18, 20 ; 118, 120),
**caractérisée en ce que** l'unité de contrôle (30 ; 130) est configurée pour mettre en oeuvre le procédé selon l'une quelconque des revendications 1 à 6.

8. Installation (I) de protection solaire selon la revendication 7, **caractérisée en ce que** l'installation (I) comprend une unité de commande (2 ; 102), l'unité de commande (2 ; 102) comprenant au moins un premier élément de sélection (42) et au moins un deuxième élément de sélection (44), distinct du premier élément de sélection (42), et **en ce que** les premier et deuxième éléments de sélection (42, 44) commandent les barres supérieure (10) et inférieure (12) par l'intermédiaire de l'unité de contrôle (30 ; 130).

9. Installation (I) de protection solaire selon la revendication 8, **caractérisée en ce qu'**un double appui sur le premier élément de sélection (42) commande un empilement des barres supérieure et inférieure (10, 12) dans une position prédéterminée haute de chacune des barres supérieure et inférieure (10, 12) et **en ce qu'**un double appui sur le deuxième élément de sélection (44) commande un empilement des barres supérieure et inférieure (10, 12) dans une position prédéterminée basse de chacune des barres supérieure et inférieure (10, 12).

10. Installation (I) de protection solaire selon la revendication 8 ou selon la revendication 9, **caractérisée en ce que** l'unité de commande (2 ; 102) comprend au moins un troisième élément de sélection (6), **en ce que** les premier et deuxième éléments de sélection (42, 44) commandent les barres supérieure et inférieure (10, 12), de sorte à régler une position d'une zone d'occultation par l'écran (13), et **en ce que** le troisième élément de sélection (6) commande les barres supérieure et inférieure (10, 12), de sorte à régler une étendue verticale de la zone d'occultation par l'écran (13).

11. Installation (I) de protection solaire selon la revendication 10, **caractérisée en ce que** les premier et deuxième éléments de sélection (42, 44) sont configurés pour sélectionner une action commandée par le troisième élément de sélection (6) et, éventuellement, **en ce que** les premier et deuxième éléments de sélection (42, 44) sont, en outre, configurés pour commander une ouverture ou une fermeture totale de l'écran (13).

## Patentansprüche

1. Verfahren zur Steuerung des Betriebs einer Sonnenschutzanlage (I), wobei die Anlage (I) mindestens umfasst:
- eine Abdeckvorrichtung (9), wobei die Abdeckvorrichtung (9) mindestens umfasst:
- eine obere Stange (10),
- eine untere Stange (12) und
- einen Schirm (13), wobei der Schirm (13) zwischen der oberen und der unteren Stange (10, 12) angeordnet ist,
- eine motorisierte Antriebsvorrichtung (17; 117), wobei die motorisierte Antriebsvorrichtung (17; 117) so konfiguriert ist, dass sie den Schirm (13) ausfährt und einfährt, wobei die motorisierte Antriebsvorrichtung (17; 117) mindestens umfasst:
-- einen ersten elektromechanischen Aktuator (18; 118), wobei der erste elektromechanische Aktuator (18; 118) so konfiguriert ist, dass er die obere Stange (10) bewegt,
-- einen zweiten elektromechanischen Aktuator (20; 120), wobei der zweite elektromechanische Aktuator (20; 120) so konfiguriert ist, dass er die untere Stange (12) bewegt, und
-- eine Steuereinheit (30; 130), wobei die Steuereinheit (30; 130) so konfiguriert ist, dass sie den ersten und den zweiten elektromechanischen Aktuator (18, 20; 118, 120) steuert,
**dadurch gekennzeichnet, dass** die Steuereinheit (30; 130) steuert:
- den ersten elektromechanischen Aktuator (18; 118) derart, dass die obere Stange (10) bewegt wird, dann den zweiten elektromechanischen Aktuator (20; 120) derart, dass die untere Stange (12) in Abhängigkeit von der Position und/oder der Bewegung der oberen Stange (10) bewegt wird;
oder
- den zweiten elektromechanischen Aktuator (20; 120) derart, dass die untere Stange (12) bewegt wird, dann den ersten elektromechanischen Aktuator (18; 118) derart, dass die obere Stange (10) in Abhängigkeit von der Position und/oder der Bewegung der unteren Stange (12) bewegt wird.

2. Verfahren zur Steuerung des Betriebs einer Sonnenschutzanlage (I) nach Anspruch 1, **dadurch gekennzeichnet, dass** die Steuereinheit (30; 130) steuert:
- den zweiten elektromechanischen Aktuator (20; 120) derart, dass die untere Stange (12) nach oben (A12) bewegt wird, bis die untere Stange (12) die obere Stange (10) berührt, dann
- den ersten und den zweiten elektromechanischen Aktuator (18, 20; 118, 120) derart, dass gleichzeitig (AT) die obere Stange (10) und die untere Stange (12) nach oben bewegt werden, wobei die obere und die untere Stange (10, 12) in Richtung und Geschwindigkeit identisch bewegt werden;
oder
- den ersten elektromechanischen Aktuator (18; 118) derart, dass die obere Stange (10) nach unten bewegt wird, bis die obere Stange (10) die untere Stange (12) berührt, dann
- den ersten und den zweiten elektromechanischen Aktuator (18, 20; 118, 120) derart, dass gleichzeitig die obere Stange (10) und die untere Stange (12) nach unten bewegt werden, wobei die obere und die untere Stange (10, 12) in Richtung und Geschwindigkeit identisch bewegt werden.

3. Verfahren zur Steuerung des Betriebs einer Sonnenschutzanlage (I) nach Anspruch 1 oder Anspruch 2, **dadurch gekennzeichnet, dass** die Steuereinheit (30; 130) steuert:
- den ersten elektromechanischen Aktuator (18; 118) derart, dass die obere Stange (10) nach unten (D10) bewegt wird, bis die obere Stange (10) die untere Stange (12) berührt,
- den ersten elektromechanischen Aktuator (18; 118) derart, dass die Bewegung der oberen Stange (10) gestoppt wird, dann
- den zweiten elektromechanischen Aktuator (20; 120) derart, dass die untere Stange (12) nach unten bewegt (D12) und von der oberen Stange (10) entfernt wird;
oder
- den zweiten elektromechanischen Aktuator (20; 120) derart, dass die untere Stange (12) nach oben bewegt wird, bis die untere Stange (12) die obere Stange (10) berührt,
- den zweiten elektromechanischen Aktuator (20; 120) derart, dass die Bewegung der unteren Stange (10) gestoppt wird, dann
- den ersten elektromechanischen Aktuator (18; 118) derart, dass die obere Stange (10) nach oben bewegt und von der unteren Stange (12) entfernt wird.

4. Verfahren zur Steuerung des Betriebs einer Sonnenschutzanlage (I) einem der Ansprüche 1 bis 3, **dadurch gekennzeichnet, dass** die Steuereinheit (30; 130) steuert:
- den ersten elektromechanischen Aktuator (18; 118) derart, dass die obere Stange (10) bewegt wird (A10), und
- den zweiten elektromechanischen Aktuator (20; 120) derart, dass die untere Stange (12) in einer in Richtung und Geschwindigkeit identischen Bewegung mit der oberen Stange (10) gleichzeitig bewegt (A12) wird.

5. Verfahren zur Steuerung des Betriebs einer Sonnenschutzanlage (I) einem der Ansprüche 1 bis 4, **dadurch gekennzeichnet, dass** die Steuereinheit (30; 130) steuert:
- den ersten elektromechanischen Aktuator (18; 118) derart, dass die obere Stange (10) bewegt wird (A10), und
- den zweiten elektromechanischen Aktuator (20; 120) derart, dass die untere Stange (12) in einer in Geschwindigkeit identischen und in Richtung entgegengesetzten Bewegung mit und zu der oberen Stange (10) gleichzeitig bewegt (D12) wird.

6. Verfahren zur Steuerung des Betriebs einer Sonnenschutzanlage (I) nach Anspruch 5, **dadurch gekennzeichnet, dass**:
- wenn die obere Stange (10) eine Endposition erreicht, die Steuereinheit (30; 130) steuert:
-- den ersten elektromechanischen Aktuator (18; 118) derart, dass die Bewegung der oberen Stange (10) gestoppt wird, und
-- den zweiten elektromechanischen Aktuator (20; 120) derart, dass die untere Stange (12) bewegt (D12) und von der oberen Stange (10) entfernt wird; und
- wenn die untere Stange (12) eine Endposition erreicht, die Steuereinheit (30; 130) steuert:
-- den zweiten elektromechanischen Aktuator (20; 120) derart, dass die Bewegung der unteren Stange (12) gestoppt wird, und
-- den ersten elektromechanischen Aktuator (18; 118) derart, dass die obere Stange (10) bewegt und von der unteren Stange (12) entfernt wird.

7. Sonnenschutzanlage (I), wobei die Anlage (I) mindestens umfasst:
- eine Abdeckvorrichtung (9), wobei die Abdeckvorrichtung (9) mindestens umfasst:
-- eine obere Stange (10),
- eine untere Stange (12) und
-- einen Schirm (13), wobei der Schirm (13) zwischen der oberen und der unteren Stange (10, 12) angeordnet ist,
- eine motorisierte Antriebsvorrichtung (17; 117), wobei die motorisierte Antriebsvorrichtung (17; 117) so konfiguriert ist, dass sie den Schirm (13) ausfährt und einfährt, wobei die motorisierte Antriebsvorrichtung (17; 117) mindestens umfasst:
-- einen ersten elektromechanischen Aktuator (18; 118), wobei der erste elektromechanische Aktuator (18; 118) so konfiguriert ist, dass er die obere Stange (10) bewegt,
-- einen zweiten elektromechanischen Aktuator (20; 120), wobei der zweite elektromechanische Aktuator (20; 120) so konfiguriert ist, dass er die untere Stange (12) bewegt, und
-- eine Steuereinheit (30; 130), wobei die Steuereinheit (30; 130) so konfiguriert ist, dass sie den ersten und den zweiten elektromechanischen Aktuator (18, 20; 118, 120) steuert,
**dadurch gekennzeichnet, dass** die Steuereinheit (30; 130) konfiguriert ist, um das Verfahren nach einem der Ansprüche 1 bis 6 durchzuführen.

8. Sonnenschutzanlage (I) nach Anspruch 7, **dadurch gekennzeichnet, dass** die Anlage (I) eine Steuereinheit (2; 102) umfasst, wobei die Steuereinheit (2; 102) mindestens ein erstes Auswahlelement (42) und mindestens ein zweites Auswahlelement (44), das von dem ersten Auswahlelement (42) verschieden ist, umfasst, und dass das erste und das zweite Auswahlelement (42, 44) die obere (10) und die untere (12) Stange über die Steuereinheit (30; 130) steuern.

9. Sonnenschutzanlage (I) nach Anspruch 8, **dadurch gekennzeichnet, dass** durch ein zweimaliges Drücken auf das erste Auswahlelement (42) ein Stapeln der oberen und unteren Stange (10, 12) in einer vorbestimmten oberen Position jeder der oberen und unteren Stange (10, 12) befohlen wird, und dass durch ein zweimaliges Drücken auf das zweite Auswahlelement (44) ein Stapeln der oberen und unteren Stange (10, 12) in einer vorbestimmten unteren Position jeder der oberen und unteren Stange (10, 12) befohlen wird.

10. Sonnenschutzanlage (I) nach Anspruch 8 oder nach Anspruch 9, **dadurch gekennzeichnet, dass** die Steuereinheit (2; 102) mindestens ein drittes Auswahlelement (6) umfasst, dass das erste und zweite Auswahlelement (42, 44) die obere und untere Stange (10, 12) derart steuern, dass eine Position eines durch den Schirm (13) abgedeckten Bereichs eingestellt wird und dass das dritte Auswahlelement (6) die obere und untere Stange (10, 12) derart steuert, dass eine vertikale Ausdehnung des durch den Schirm abgedeckten Bereichs (13) eingestellt wird.

11. Sonnenschutzanlage (I) nach Anspruch 10, **dadurch gekennzeichnet, dass** das erste und das zweite Auswahlelement (42, 44) konfiguriert sind, um eine vom dritten Auswahlelement (6) gesteuerte Aktion auszuwählen und gegebenenfalls dass das erste und das zweite Auswahlelement (42, 44) ferner konfiguriert sind, um ein vollständiges Öffnen oder Schließen des Schirms (13) zu steuern.

## Claims

1. A method for controlling operation of a solar protection installation (I), the installation (I) comprising at least:
- an occultation device (9), the occultation device (9) comprising at least:
-- a top bar (10),
-- a bottom bar (12), and
-- a screen (13), the screen (13) being arranged between the top and bottom bars (10, 12),
- a motorized drive device (17; 117), the motorized drive device (17; 117) being configured to deploy and fold the screen (13), the motorized drive device (17; 117) comprising at least:
-- a first electromechanical actuator (18; 118), the first electromechanical actuator (18; 118) being configured to move the top bar (10),
-- a second electromechanical actuator (20; 120), the second electromechanical actuator (20; 120) being configured to move the bottom bar (12), and
-- a control unit (30; 130), the control unit (30; 130) being configured to control the first and second electromechanical actuators (18, 20; 118, 120),
**characterized in that** the control unit (30; 130) controls:
- the first electromechanical actuator (18; 118) so as to move the top bar (10) and then the second electromechanical actuator (20; 120) so as to move the bottom bar (12) depending on the position and/or movement of the top bar (10);
or
- the second electromechanical actuator (20; 120) so as to move the bottom bar (12) and then the first electromechanical actuator (18; 118) so as to move the top bar (10) depending on the position and/or movement of the bottom bar (12).

2. The method for controlling operation of a solar protection installation (I) according to claim 1, **characterized in that** the control unit (30; 130) controls:
- the second electromechanical actuator (20; 120) so as to move the bottom bar (12) upward (A12), until the bottom bar (12) contacts the top bar (10), then
- the first and second electromechanical actuators (18, 20; 118, 120) so as to simultaneously move (AT) the top bar (10) and the bottom bar (12) upward, in an identical direction and speed movement for the top and bottom bars (10, 12);
or
- the first electromechanical actuator (18; 118) so as to move the top bar (10) downward, until the top bar (10) contacts the bottom bar (12), then
- the first and second electromechanical actuators (18, 20; 118, 120) so as to simultaneously move the top bar (10) and the bottom bar (12) downward, in an identical direction and speed movement for the top and bottom bars (10, 12).

3. The method for controlling operation of a solar protection installation (I) according to claim 1 or according to claim 2, **characterized in that** the control unit (30; 130) controls:
- the first electromechanical actuator (18; 118) so as to move the top bar (10) downward (D10) until the top bar (10) contacts the bottom bar (12),
- the first electromechanical actuator (18; 118) so as to stop the movement of the top bar (10), then
- the second electromechanical actuator (20; 120) so as to move the bottom bar (12) downward (D12) and away from the top bar (10);
or
- the second electromechanical actuator (20; 120) so as to move the bottom bar (12) upward until the bottom bar (12) contacts the top bar (10),
- the second electromechanical actuator (20; 120) so as to stop the movement of the bottom bar (10), then
- the first electromechanical actuator (18; 118) so as to move the top bar (10) upward and away from the bottom bar (12).

4. The method for controlling operation of a solar protection installation (I) according to any one of claims 1 to 3, **characterized in that** the control unit (30; 130) controls:
- the first electromechanical actuator (18; 118) so as to move (A10) the top bar (10), and
- the second electromechanical actuator (20; 120) so as to simultaneously move (A12) the bottom bar (12), in an identical movement, in direction and speed, to that of the top bar (10).

5. The method for controlling operation of a solar protection installation (I) according to any one of claims 1 to 4, **characterized in that** the control unit (30; 130) controls:
- the first electromechanical actuator (18; 118) so as to move (A10) the top bar (10), and
- the second electromechanical actuator (20; 120) so as to simultaneously move (D12) the bottom bar (12), in a movement identical in speed and opposite in direction to that of the top bar (10).

6. The method for controlling operation of a solar protection installation (I) according to claim 5, **characterized in that**:
- when the top bar (10) reaches an end-of-travel position, the control unit (30; 130) controls:
-- the first electromechanical actuator (18; 118) so as to stop the movement of the top bar (10), and
-- the second electromechanical actuator (20; 120) so as to move (D12) the bottom bar (12) away from the top bar (10); and
- when the bottom bar (12) reaches an end-of-travel position, the control unit (30; 130) controls:
-- the second electromechanical actuator (20; 120) so as to stop the movement of the bottom bar (12), and
-- the first electromechanical actuator (18; 118) so as to move the top bar (10) away from the bottom bar (12).

7. A solar protection installation (I), the installation (I) comprising at least:
- an occultation device (9), the occultation device (9) comprising at least:
-- a top bar (10),
-- a bottom bar (12), and
-- a screen (13), the screen (13) being arranged between the top and bottom bars (10, 12),
- a motorized drive device (17; 117), the motorized drive device (17; 117) being configured to deploy and fold the screen (13), the motorized drive device (17; 117) comprising at least:
-- a first electromechanical actuator (18; 118), the first electromechanical actuator (18; 118) being configured to move the top bar (10),
-- a second electromechanical actuator (20; 120), the second electromechanical actuator (20; 120) being configured to move the bottom bar (12), and
-- a control unit (30; 130), the control unit (30; 130) being configured to control the first and second electromechanical actuators (18, 20; 118, 120), **characterized in that** the control unit (30; 130) is configured to implement the method according to any one of claims 1 to 6.

8. The solar protection installation (I) according to claim 7, **characterized in that** the installation (I) comprises a command unit (2; 102), the command unit (2; 102) comprising at least one first selection element (42) and at least one second selection element (44), distinct from the first selection element (42), and **in that** the first and second selection elements (42, 44) control the top (10) and bottom (12) bars via the control unit (30; 130).

9. The solar protection installation (I) according to claim 8, **characterized in that** a double press on the first selection element (42) controls a stacking of the top and bottom bars (10, 12) in a predetermined high position of each of the top and bottom bars (10, 12), and **in that** a double press on the second selection element (44) controls a stacking of the top and bottom bars (10, 12) in a predetermined low position of each of the top and bottom bars (10, 12).

10. The solar protection installation (I) according to claim 8 or according to claim 9, **characterized in that** the command unit (2; 102) comprises at least a third selection element (6), **in that** the first and second selection elements (42, 44) control the top and bottom bars (10, 12), so as to set a position of an occultation area by the screen (13), and **in that** the third selection element (6) controls the top and bottom bars (10, 12), so as to set a vertical extent of the occultation area by the screen (13).

11. The solar protection installation (I) according to claim 10, **characterized in that** the first and second selection elements (42, 44) are configured to select an action controlled by the third selection element (6) and, optionally, **in that** the first and second selection elements (42, 44) are further configured to control fully opening or closing the screen (13).
